# EUROPÄISCHE PATENTANMELDUNG

(11) **EP 0 947 869 A2**
(43) Veröffentlichungstag der Anmeldung: **06.10.1999**
(21) Anmeldenummer: 99106008.8
(22) Anmeldetag: 25.03.1999
(51) Int. Cl.: G02B 7/00

(54) **Optisches Bauelement**

(30) Priorität: 03.04.1998 DE 19814969
(71) Anmelder: DaimlerChrysler AG, 70567 Stuttgart (DE)
(72) Erfinder: Moisel, Jörg, Dr., 89073 Ulm (DE); Rode, Manfred, 89250 Senden (DE)

(57) **Zusammenfassung**

In der optischen Verbindungstechnik, der optischen Nachrichtentechnik und in optischen Systemen ist es erforderlich, Lichtstrahlen als Träger von Information umzulenken, zu verteilen sowie emittiertes Licht aus Sendern zu formen und parallel zu richten.

Die Erfindung bezieht sich auf ein optisches Bauelement und auf ein Verfahren zu dessen Herstellung. Das Bauelement ist als würfelförmiger Körper, in dem ein Schlitz ausgespart ist ausgebildet, in den ein die optischen Eigenschaften bestimmendes Trägerplättchen eingebracht ist.

Konvex oder konkav geformte Würfeloberflächen dienen zur Strahlformung. Die Ausgangsform zur Herstellung des Würfels sind zwei mittels Spritzgußverfahrens einfach herstelltbare Hälften, in die das Trägerplättchen beispielsweise eingeklebt wird.

## Beschreibung

Die Erfindung bezieht sich auf ein optisches Bauelement nach dem Oberbegriff des Patentanspruchs 1 und ein Verfahren zu dessen Herstellung nach dem Oberbegriff des Patentanspruchs 13.

In der optischen Verbindungstechnik, der optischen Nachrichtentechnik und in optischen Systemen ist es erforderlich, Lichtstrahlen als Träger von Information umzulenken, zu verteilen sowie emittiertes Licht aus Sendern zu formen und parallel zu richten. Ebenso werden optische Informationen in Lichtwellenleiter eingekoppelt und parallele Lichtbündel auf Empfänger fokussiert.

Aus der Schrift Miyazaki et al. - Tech. Dig. Conf. On Opt. Comp., 16.-19.3.1993, Palm Springs ist ein optisches Bauelement bekannt, das als würfelförmiger Körper ausgebildet ist, auf dessen Seitenflächen Linsen, Filter sowie λ/4-Schichten aufgebracht sind. Eine Strahlführung und Strahlteilung innerhalb des Würfels ist durch eine entlang einer Seitenflächendiagonalen verlaufende Schicht bestimmt, deren Funktionalität bereits beim Herstellungsprozeß festgelegt ist und danach nicht mehr abgeändert werden kann. Besonders im Zusammenhang mit komplexen optischen Systemen, bei denen eine Vielzahl dieser würfelförmigen Einzelelemente unterschiedlicher Funktion zum Einsatz kommen, ist eine möglichst große Variationsbreite in den optischen Eigenschaften im Zusammenhang mit einer kostengünstigen Massenproduktion erforderlich.

Der Erfindung liegt deshalb die Aufgabe zugrunde, ein optisches Bauelement anzugeben, dessen optische Eigenschaften auf einfache Weise variiert werden können und das kostengünstig herzustellen ist.

Die Erfindung wird in Bezug auf das optische Bauelement durch die Merkmale des Patentanspruchs 1 und in Bezug auf ein Verfahren durch die Merkmale des Patentanspruchs 13 wiedergegeben. Die weiteren Ansprüche enthalten vorteilhafte Aus- und Weiterbildungen der Erfindung.

Der besondere Vorteil der Erfindung besteht darin, daß auf einfache Weise dessen optische Eigenschaften variiert werden können. Das erfindungsgemäße Bauelement ist dadurch vielseitig einsetzbar und wird den Erfordernissen in komplexen optischen Systemen gerecht und kann zudem kostengünstig hergestellt werden.

Die bevorzugte Grundform ist ein würfelförmiger Körper mit diagonal verlaufendem Schlitz geringer Breite und weist gegebenenfalls mindestens eine gekrümmten Würfelfläche auf. Durch seine geometrische Form lassen sich aus der würfelförmigen Grundform komplexe optische Anordnungen realisieren, indem mehrere Würfel für die gewünschte Funktionalität zusammengesetzt werden. Die Würfel sind durch Führungselemente leicht zu plazieren und gegeneinander zu justieren. Falls erforderlich, kann außer der bevorzugten Würfelform auch jede andere geometrische Form realisiert werden, welche die in der Erfindung beschriebene Funktionalität aufweist.

Durch das Einsetzen eines Trägerplättchens in den Schlitz, auf dessen Oberfläche beispielsweise eine Spiegel- oder Filterschicht aufgebracht ist, werden die optischen Eigenschaften des Würfels und so dessen Funktion festgelegt. Diese Spiegel- und Filterschichten lassen sich kostengünstig auf großflächige Substrate aufdampfen und mit Verfahren der Halbleitertechnik zu kleinen Trägerplättchen verarbeiten. Zudem ist es auch möglich, aktive optische Bauelemente, beispielsweise LCD-Elemente, in den Schlitz einzubringen um Polarisations-Strahlteiler mit schaltbarer Richtung zu realisieren.

Üblicherweise besitzt mindestens eine Seitenfläche des würfelförmigen optischen Bauelements zentrisch eine sphärische oder asphärische Erhebung. Diese dient der Strahlformung des in das optische Bauelement ein- oder austretenden Lichtstrahls. Lediglich in komplexen Anordnungen mehrerer Bauelemente wird auf eine gekrümmte Seitenfläche auch in den Fällen verzichtet, bei denen ein direkter Lichtübergang bei aneinandergrenzenden Würfeln ohne eine Strahlformung stattfindet. Mit vielseitiger Variationsmöglichkeit lassen sich so Lichtstrahlen gleichzeitig formen, kollimieren oder fokussieren. Außerdem besteht die Möglichkeit, Lichtstrahlen in weitere, in ihren optischen Eigenschaften angepaßte Ebenen, beispielsweise Würfelflächen zu bringen, um diese dort aufzuteilen. Auch können die Würfeloberflächen Schichten aufweisen, die bei komplexen Systemen einen verlustarmen Lichtübergang von einem Würfelelement in ein benachbartes gewährleisten.

Das optische Bauelement ist ein Formteil, das mittels Spritzgußverfahren als Gesamtteil hergestellt wird oder aus einzelnen Komponenten zusammengefügt und fixiert werden kann. Die Fixierung der Einzelkomponenten erfolgt bevorzugt durch Verkleben oder Löten.

Im folgenden wird die Erfindung anhand von vorteilhaften Ausführungsbeispielen unter Bezugnahme auf schematische Zeichnungen in den folgenden Figuren näher erläutert. Es zeigen:
- Fig. 1: Optisches Bauelement als würfelförmiger Körper mit konvexer Seitenfläche,
- Fig. 2: Optisches Bauelement mit konvexer, ins Würfelinnere gerichteter Seitenfläche,
- Fig. 3: Optisches Bauelement mit konkaver Seitenfläche,
- Fig. 4: Optisches Bauelement mit durchgehendem Schlitz,
- Fig. 5a-d: Ausführungsformen bei Trägerplättchen,
- Fig. 6: Funktionsweise eines optischen Bauelements,
- Fig. 7: Vorteilhafte Ausgangsformen nach Spritzguß-Herstellungsverfahren.
- Fig. 8: Spritzguß-Ausgangsform mit innenliegendem Trägerplättchen.

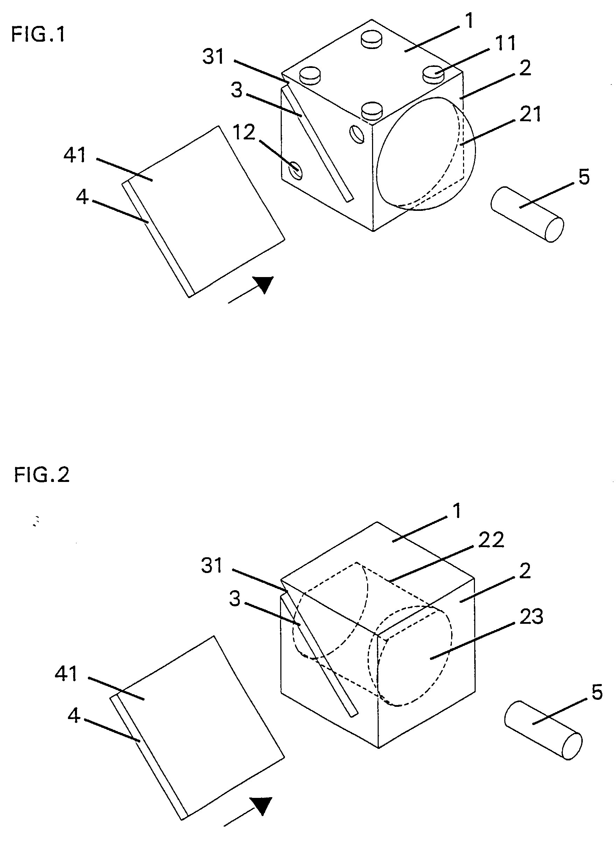

Im Ausführungsbeispiel gemäß Fig. 1 wird ein optisches Bauelement in der bevorzugten Ausführungsform eines würfelförmigen Körpers 1 dargestellt.

Im Inneren des Würfels verläuft ein Schlitz 3, in den ein die optischen Eigenschaften bestimmendes Trägerplättchen 4 eingebracht wird. Die optischen Eigenschaften werden durch dünne Schichten auf der Oberseite 41 des Trägerplättchens 4 festgelegt. Im eingebauten Zustand verläuft die Oberseite 41 des Trägerplättchens 4 mit der funktionsbestimmenden Schicht entlang der Seitenflächendiagonalen 31. Dadurch verläuft der Schlitz 3 etwas azentrisch, jedoch parallel zu der Seitenflächendiagonalen 31. Die zentrische Anordnung der funktionsbestimmenden Schicht nutzt die Symmetrieelemente des Würfels, mit denen sich auch komplexe Anordnungen, bestehend aus einer Vielzahl einzelner Würfel aufbauen lassen.

Zur Strahlformung des in den Würfel eintretenden Lichts, das beispielsweise aus einem Lichtwellenleiter 5 oder Sender 6 stammt, ist zumindest eine Seitenfläche 2 gekrümmt ausgebildet. Durch eine der Strahlform angepaßte konvexe, also nach außen gerichtete Geometrie 21 lassen sich divergente Strahlenbündel parallel richten und im Würfelinneren führen.

Alternativ dazu zeigt Fig.2 ein optisches Bauelement, bei dem in eine zylinderförmige Aussparung 22 innerhalb des Würfels eine plankonvexe und mit der Krümmung ins Würfelinnere gerichtete Linse 23 eingebracht ist. Diese Anordnung hat den besonderen Vorteil, daß die Würfelflächen eben ausgebildet sind und sich so die Wirkung einer Sammellinse im Zusammenhang mit komplexen optischen Systemen, bei denen eine Vielzahl dieser würfelförmigen Einzelelemente zum Einsatz kommen gewährleistet ist.

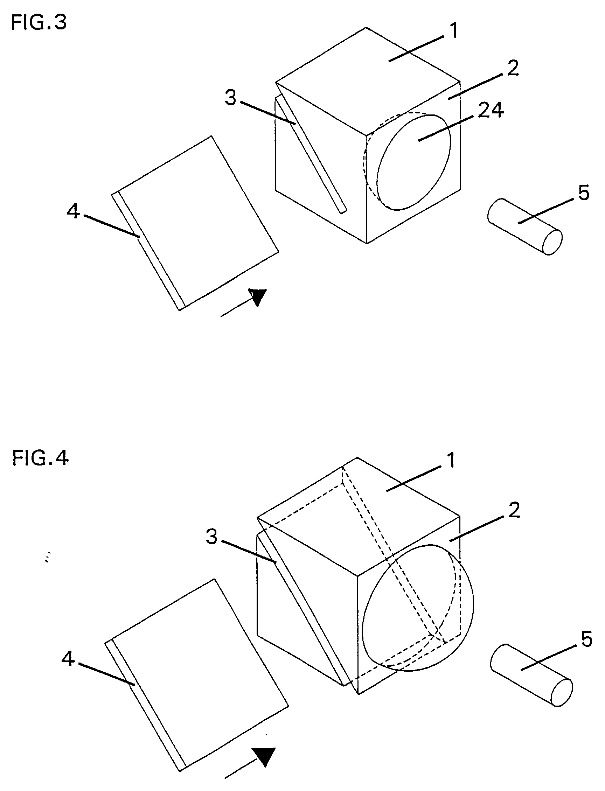

In gleicher Weise können Seitenflächen, die konkav ins Innere des Würfels orientiert 24 sind, konvergente Strahlenbündel parallel richten (Fig. 3).

Halbkugelförmige konvexe oder konkave Linsensysteme finden besonders bei punktförmigen Sendern oder Empfängern mit Kleiner Detektionsfläche Anwendung.

Jeder Würfel besitzt an zumindest einer Seitenfläche eine Struktur oder Markierung, die eine exakte Justage aufeiner Unterlage oder gegenüber benachbarten Würfels oder anderen optischen Bauelementen erlaubt (Fig. 1).

Hierzu werden aufder Seitenfläche beispielsweise Noppen 11 in Verbindung mit dazu passenden Vertiefungen 12 angebracht. Die Anordnung der Noppen 11 und Vertiefungen 12 ist derart, daß sich Kombinationsmöglichkeiten gegenüber benachbarten Elementen in Verbindung mit einer exakten Justage ergeben. Um eine optimale Strahlführung zu gewährleisten, sind die Noppen 11 und Vertiefungen 12 üblicherweise nahe der Würfelecken angeordnet, so daß das Licht die Würfeloberfläche ungestört passieren kann.

Fig. 4 zeigt eine entlang dem Schlitz geteilte zweiteilige Variante des in Fig. 1 einteilig dargestellten Bauelements, die ein einfaches Einsetzen des Trägerplättchens 4, gegebenenfalls in Führungsstifte ermöglicht.

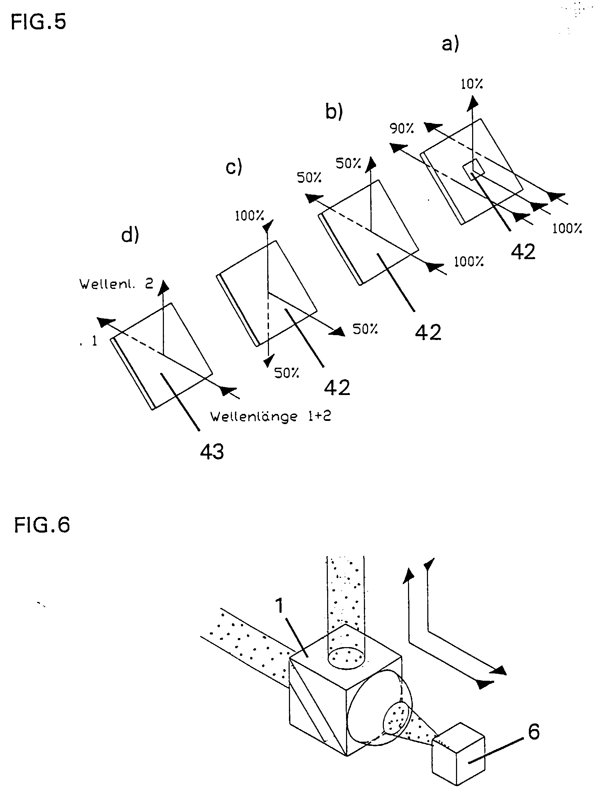

In Fig. 5a bis d sind einige bevorzugte Ausführungsformen unterschiedlicher Oberseiten 41 der Trägerplättchen 4 dargestellt. Außer einer ganzflächigen, vollständig reflektierenden Beschichtung der Oberseite 41 eines Trägerplättchens 4, kann durch eine Teilbedeckung 42 der Oberfläche das durch den Würfel geradlinig hindurchtretende und das reflektierte Licht zu beliebigen Anteilen verändert werden. Um, wie in der Fig. 5a dargestellt, über den Flächenanteil der reflektierenden Schicht 42 eine exakte prozentuale Aufteilung des eintretenden Lichts zu erhalten, sind entsprechende Anforderungen an die Strahlformung, insbesondere an den Strahlquerschnitt vor oder beim Eintritt des Lichts in den Würfel zu stellen. Die Lichtaufteilung kann auch gemäß Fig. 5b durch eine ganzflächige, jedoch teildurchlässige Schicht 42 erfolgen. Die Strahlaufteilung hängt dann, unabhängig vom Bedeckungsgrad der Schicht auf dem Trägerplättchen 4, lediglich von der Schichtbeschaffenheit ab. In Fig. 5c ist für eine teildurchlässige Schicht die Umkehrbarkeit des Strahlweges dargestellt, der bei Mehrfachreflexion, gegebenenfalls an zusätzlichen Schichten, auf den Würfeloberflächen den Lichtstrahl formt und teilt. Ebenso können auch, wie in Fig. 5d für zwei Wellenlängen dargestellt, Schichten 43 auf der Oberseite 41 des Trägerplättchens 4 für das eingestrahlte Licht unterschiedlicher Wellenlänge wellenlängenselektiv teildurchlässig beschaffen sein oder auch auf den Polarisationszustand des eingestrahlten Lichts wirken.

Zudem sind Trägerplättchen 4 denkbar, die aktive optische Komponenten, beispielweise LCD's enthalten. Dadurch lassen sich Polarisations- Strahlteiler mit schaltbarer Richtung realisieren. Mit jede Schichtvariante, einschließlich deren Kombinationen, ist die Funktionalität des optischen Bauelements in vielfältiger Weise variabel.

Gerade im Zusammenhang mit komplexen optischen Systemen, bei denen eine Vielzahl würfelförmiger Einzelelemente angeordnet werden, ist eine große Variationsbreite in den optischen Eigenschaften im Zusammenhang mit einer kostengünstigen Massenproduktion gewährleistet.

Fig. 6 zeigt exemplarisch die Strahlformung eines divergenten Strahlenbündels aus einem punktförmigen Sender 6. Das emittierte Licht wird durch eine halbkugelförmige Linse parallel gerichtet und durch eine teildurchlässige Schicht auf dem Trägerplättchen 4 aufgespalten. Beide Teilstrahlen treten parallel gerichtet an zwei unterschiedlichen Würfelflächen wieder aus. Die Pfeilrichtungen deuten auf die Umkehrbarkeit des Strahlweges hin, bei der das vom Würfel stammende Licht konvergent, beispielsweise auf einen Empfänger fällt.

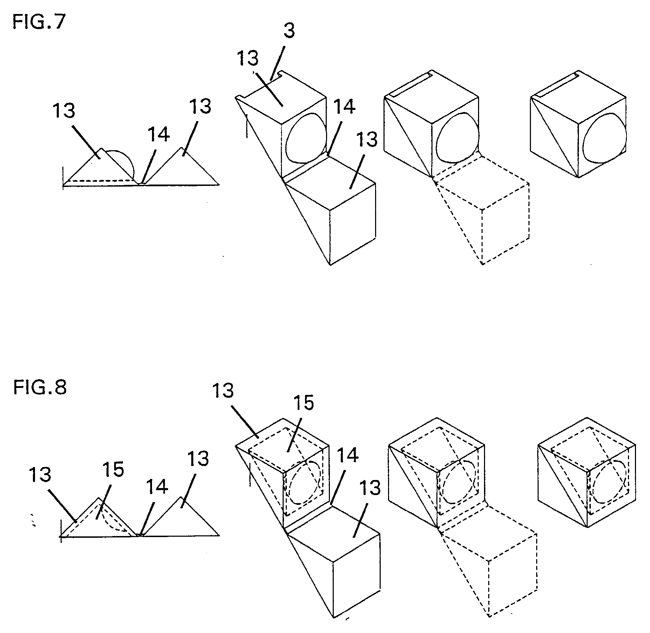

Außer der in Fig. 4 dargestellten, entlang dem Schlitz geteilten zweiteiligen Variante des Bauelements, zeigen die Fig. 7 und 8 zwei Würfelhälften, die über eine gemeinsame Kante verbunden sind, so daß bei der endgültigen Montage das Trägerplättchen 4 allein durch Umklappen der beiden Hälften im Würfelinneren eingeschlossen werden kann. Im aufgefalteten Zustand liegt die gesamte Fläche zum Aufbringen eines Klebers frei, bevor das Trägerplättchen eingepaßt wird.

Auch ein Verlöten der Einzelteile wäre denkbar. Beide in Fig. 7 und 8 dargestellte Ausgangsformen lassen sich als Massenprodukt mit Hilfe des Spritzgußverfahrens herstellen. Fig. 7 beinhaltet eine zur Oberfläche des Würfels offene Schlitzform, in die ein planparalleles Trägerplättchen auch noch nach Zusammenfügen der Würfelhälften eingeführt werden kann. Bei nachträglichem Einführen des Trägerplättchen ist auch ein etwas keilförmiges Trägerplättchen mit entsprechend angepaßtem Schlitz, der sich ins Würfelinnere verjüngt von Vorteil. Andere Varianten der Trägerplättchen sind in Fig. 8 beispielhaft dargestellt. Dort besitzt das Trägerplättchen eine dachförmige Gestalt, das in diesem Fall auch strahlformende Elemente der Würfeloberfläche enthält. Die funktionsbestimmende Schicht ist in diesem Falle auf der Unterseite aufgebracht.

## Patentansprüche

1. Optisches Bauelement, bevorzugt ausgebildet als würfelförmiger Körper (1), dadurch gekennzeichnet,
daß der würfelförmige Körper (1) einen Schlitz (3) enthält, in den ein die optischen Eigenschaften bestimmendes Trägerplättchen (4) eingebracht ist.

2. Optisches Bauelement nach Anspruch 1, dadurch gekennzeichnet, daß der Schlitz (3) mit einer Begrenzungsfläche im würfelförmigen Körper (1) entlang einer Seitenflächendiagonalen (31) verläuft.

3. Optisches Bauelement nach Anspruch 1 oder 2, dadurch gekennzeichnet, daß auf der Oberseite (41) des Trägerplättchens (4) eine spiegelnde Schicht (42) aufgebracht ist, die im eingebauten Zustand entlang der Seitenflächendiagonalen (31) verläuft.

4. Optisches Bauelement nach Anspruch 3, dadurch gekennzeichnet, daß die spiegelnde Schicht (42) nur einen Teil der Oberseite (41) des Trägerplättchens (4) bedeckt.

5. Optisches Bauelement nach Anspruch 3, dadurch gekennzeichnet, daß die spiegelnde Schicht (42) auf der Oberseite (41) des Trägerplättchens (4) für das eingestrahlte Licht teildurchlässig ist.

6. Optisches Bauelement nach Anspruch 3, dadurch gekennzeichnet, daß die spiegelnde Schicht (42) auf der Oberseite (41) des Trägerplättchens (4) für eingestrahltes Licht mit unterschiedlicher Wellenlänge wellenlängenselektiv teildurchlässig ist.

7. Optisches Bauelement nach Anspruch 1 oder 2, dadurch gekennzeichnet, daß auf der Oberseite (41) des Trägerplättchens (4) eine Filterschicht (43) aufgebracht ist, die im eingebauten Zustand entlang der Seitenflächendiagonalen (31) verläuft.

8. Optisches Bauelement nach Anspruch 1 oder 2, dadurch gekennzeichnet, daß das Trägerplättchen (4) aktive optische Komponenten enthält.

9. Optisches Bauelement nach Anspruch 8, dadurch gekennzeichnet, daß die aktive optische Komponente ein LCD Element ist.

10. Optisches Bauelement nach Anspruch 1, dadurch gekennzeichnet, daß die Oberfläche der Seitenflächen des würfelförmigen Körpers (1) Noppen (11) und Vertiefungen (12) zur Justage besitzt.

11. Optisches Bauelement nach einem der vorhergehenden Ansprüche, dadurch gekennzeichnet, daß der würfelförmige Körper (1) mit zumindest einer gekrümmt geformte Seitenfläche (2), die konvex nach außen orientiert (21) oder konvex nach innen orientiert (23) ist oder sich konkav im Inneren des Bauelements befindet (24), ausgebildet ist.

12. Optisches Bauelement nach Anspruch 11, dadurch gekennzeichnet, daß die gekrümmt geformten Seitenflächen (2) als halbkugelförmige Linsen ausgebildet sind.

13. Verfahren zur Herstellung des optischen Bauelements nach einem der vorhergehenden Ansprüche, dadurch gekennzeichnet,
- daß zwei entlang der Seitenflächendiagonalen (31) parallel zum Schlitz (3) geteilte Würfelhälften (13) mittels Spritzgußverfahren hergestellt werden,
- daß in den Schlitz (3) das Trägerplättchen (4) eingefügt wird, und
- daß durch zusammenfügen der Würfelhälften (13) der wärfelförmige Körper (1) entsteht.

14. Verfahren zur Herstellung des optischen Bauelements nach Anspruch 13, dadurch gekennzeichnet, daß die geteilten Würfelhälften (13) über eine gemeinsame Würfelkante (14) verbunden werden.

15. Verfahren zur Herstellung des optischen Bauelements nach einem der Ansprüche 13 oder 14, dadurch gekennzeichnet, daß das Trägerplättchen (4) und die zusammengefügten Würfelflächen (13) verklebt oder verlötet werden.
